# EUROPEAN PATENT SPECIFICATION

(11) **EP 3 413 445 B1**
(45) Date of publication and mention of the grant of the patent: **26.05.2021**
(21) Application number: 16888999.6
(22) Date of filing: 04.07.2016
(51) Int. Cl.: H02K 33/18, H02K 1/12, H02K 1/18

(54) **VOICE COIL MOTOR**
SCHWINGSPULENMOTOR
MOTEUR À BOBINE MOBILE

(30) Priority: 01.02.2016 CN 201610071587
(43) Date of publication of application: 12.12.2018
(73) Proprietor: Shenzhen Comen Medical Instruments Co., Ltd., Shenzhen, Guangdong 518052 (CN)
(72) Inventor: LI, Zeng, Shenzhen Guangdong 518052 (CN); TAN, Heng, Shenzhen Guangdong 518052 (CN); WEI, Wenyuan, Shenzhen Guangdong 518052 (CN); FENG, Zhichun, Beijing 100000 (CN)
(74) Representative: J A Kemp LLP
(86) International application number: PCT/CN2016/088491
(87) International publication number: WO 2017/133181

(56) References cited:
- CN-A- 101 498 829
- CN-A- 103 907 273
- CN-A- 104 702 049
- CN-A- 104 702 083
- CN-U- 205 490 074
- CN-U- 205 544 869
- DE-B- 1 139 575
- JP-A- S5 688 664
- KR-A- 20060 099 261

## Description

### TECHNICAL FIELD

The present disclosure relates to the technical field of motors, and particularly relates to a voice coil motor.

### BACKGROUND

The voice coil motor (VCM) is a type of motor, and a conventional voice coil motor is generally composed of a ferromagnetic cylinder, a permanent magnet, a coil support, a tubular coil, and other structures. The working principle of the voice coil motor is: when electrified, the coil generates an electromagnetic force and drives a load for a linear motion, and the strength and the direction of the electromagnetic force can be changed via changing the strength and the polarity of the current. However, in a conventional voice coil motor, the volume of the permanent magnet is subjected to great limits, thus the force of the motor caused by the magnetic field strength is significantly affected. This structure can also cause a considerable degree of magnetic flux leakage, which reduces the utilization of the magnetic field. Meanwhile, the design of the coil support is generally simple and cumbersome, which will also significantly reduce the force of the motor.
JP S56 88664 A discloses a linear motor.
DE 11 39575 B discloses a dynamic electromechanical transducer.

### SUMMARY

Accordingly, it is necessary to provide a voice coil motor to address the problem of magnetic flux leakage in the stator and lower utilization of the magnetic field.

A voice coil motor according to the invention as defined by claim 1 includes:
a stator including a base, a magnet and an end cover, the magnet is engaged with the end cover, the base defines a cavity; the magnet and the end cover are located in the cavity;
a mover (rotor, rotator) including a frame, a coil and a push rod, the frame defines a connecting hole, the push rod is partially located in the connecting hole and is configured to abut against the fastener, the coil is wound around the frame, and the frame is sleeved on the end cover; and
an upper cover, the mover is located in the upper cover, and the upper cover is coupled to the base.

The stator further includes a fastener; the base, the magnet and the end cover each define a mounting through hole, and the fastener extends through the mounting through holes to sequentially connect to the end cover, the magnet, and the base.

The stator further includes a first bearing and an embedding block;
the embedding block defines a first through hole, and the first bearing is partially engaged with an inner wall of the first through hole; and
the first bearing defines a second through hole, and the push rod extends through the second through hole and is engaged with the fastener.

In one of the embodiments, the end cover defines a recess in communication with the mounting through hole;
the fastener is located in the mounting through hole, the embedding block is located in the recess and abuts against the fastener.

In one of the embodiments, the push rod includes a connecting rod and an abutting block, which are integrally formed; the connecting rod is perpendicular to the abutting block.

In one of the embodiments, the frame includes a frame body and a wire winding portion, which are integrally formed; the coil is located at the wire winding portion;
the frame body has a triangular claw shape, and the abutting block abuts against the frame body.

In one of the embodiments, the mover further includes a wire leading board sleeved on the connecting rod, and the wire leading board is sandwiched between the abutting block and the frame body.

In one of the embodiments, the voice coil motor further includes a second bearing, the upper cover defines a receiving groove, the push rod extends through the receiving groove, and the second bearing is sleeved on the push rod and is engaged with an inner wall of the receiving groove.

In one of the embodiments, the voice coil motor further includes an external board, the upper cover defines an external hole on a sidewall thereof, and the external board is engaged with an inner wall of the external hole and is electrically coupled to the wire leading board.

According to the aforementioned voice coil motor, the cavity is defined in the base, and the magnet is located in the cavity, the magnet and the base are seamlessly engaged with each other without causing a magnetic flux leakage, and the utilization of the magnetic field is maximized. Meanwhile, the stator is integrally designed, such that the structure of the voice coil motor is compact, simple, and easy-to-mount, and the structure has a good integration.

### BRIEF DESCRIPTION OF THE DRAWINGS

FIG. 1 is an exploded view of a voice coil motor;
FIG. 2 is a cross-sectional view of the voice coil motor; and
FIG. 3 is an exploded, cross-sectional view of the voice coil motor.

### DETAILED DESCRIPTION OF THE EMBODIMENTS

Embodiments of the present disclosure are described more fully hereinafter with reference to the accompanying drawings. A preferred embodiment is described in the accompanying drawings. The various embodiments of the invention may, however, be embodied in many different forms and should not be construed as limited to the embodiments set forth herein. Rather, these embodiments are provided so that this disclosure will be thorough and complete, and will fully convey the scope of the invention as defined by claim 1.

Unless otherwise defined, all terms (including technical and scientific terms) used herein have the same meaning as commonly understood by one of ordinary skill in the art to which this invention belongs. The terms used herein is for the purpose of describing particular embodiments only and is not intended to limit the present disclosure. As used herein, the term "and/or" includes any and all combinations of one or more of the associated listed items.

A voice coil motor is a device that converts electrical energy to mechanical energy and achieve a linear and limited swing angled motion. It utilizes an interaction between magnetic poles in the magnetic field generated by a permanent magnet or an electrified coil to generate a regular motion.

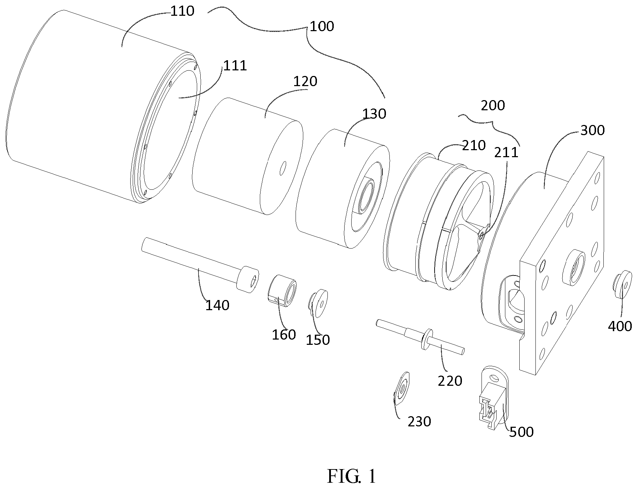

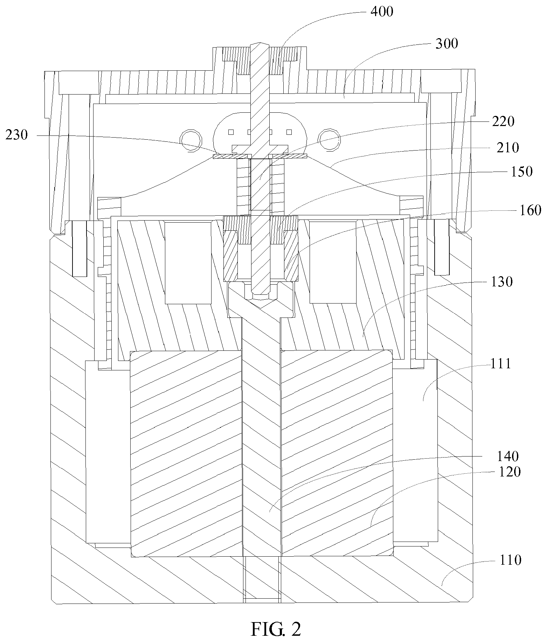

FIG. 1 is an exploded view of a voice coil motor, which includes a stator 100. The stator 100 includes a base 110, a magnet 120, and an end cover 130. FIG. 2 is a cross-sectional view of the voice coil motor. The magnet 120 is engaged with the end cover 130, the base 110 defines a cavity 111; the magnet 120 and the end cover 130 are located in the cavity 111; a rotator 200, and the rotator 200 includes a frame 210, a coil (not shown) and a push rod 220, the frame 210 defines a connecting hole 211, the push rod 220 is partially located in the connecting hole 211 and abuts against the end cover 130, the coil (not shown) is wound around the frame 210, and the frame 210 is sleeved on the end cover 130; and an upper cover 300, the rotor 200 is located in the upper cover 300, and the upper cover 300 is coupled to the base 110.

Additionally, it should be understood that when the coil (not shown) is electrified, a force perpendicular to the magnetic field line will be generated when the electrified coil (not shown) (conductor) passes through the magnetic field, and the strength of the force depends on a length of the coil (not shown) (conductor) and the strengths of the magnetic field and the current. The voice coil motor converts an actual current to a linear thrust, and the strength of the thrust is proportional to the strength of the current that actually passes through. In the illustrated embodiment, the base 110 defines the cavity 111, and the magnet 120 is located in the cavity 111, so as to engage them. There's no seam between the magnet 120 and the base 110, thus no magnetic flux leakage will occur, and the utilization of the magnetic field is maximized. Meanwhile, the stator is integrally designed, such that the structure of the voice coil motor is compact, simple, and easy-to-mount, and the structure has a good integration.

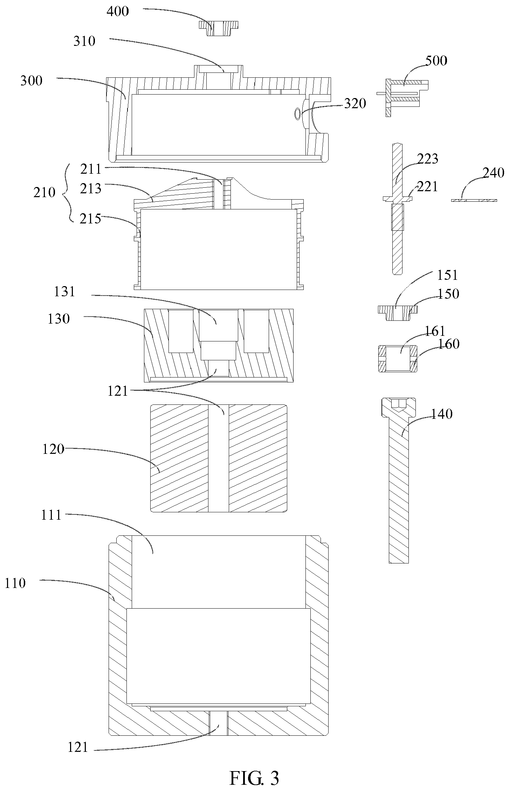

In the illustrated embodiment, the stator 100 further includes a fastener 140. FIG. 3 is an exploded and cross-sectional view of the voice coil motor, and the base 110, the magnet 120, and the end cover 130 each define a mounting through hole 121. Referring to FIG. 3, the fastener 140 sequentially extends through the mounting through holes 121 to connect to the end cover 130, the magnet 120, and the base 110. In the illustrated embodiment, the fastener 140 is a fixing screw, and in other embodiments, the fastener 140 can be a rivet, or a bolt, but is not limited thereto.

The stator 100 further includes a first bearing 150 and an embedding block 160. Referring to FIG. 3, the embedding block 160 defines a first through hole 161, and referring to FIG. 2, the first bearing 150 is partially engaged with an inner wall of the first through hole 161. The first bearing 150 defines a second through hole 151, and the push rod 220 extends through the second through hole 151 and is engaged with the fastener 140. The end cover 130 defines a recess 131 in communication with the mounting through hole 121, the fastener 140 is located in the mounting through hole 121, the embedding block 160 is located in the recess 131 and abuts against the fastener 140.

In the illustrated embodiment, referring to FIG. 3, the push rod 220 includes a connecting rod 221 and an abutting block 223, which are integrally formed. The connecting rod 221 is arranged perpendicular to the abutting block 223. The frame 210 includes a frame body 213 and a wire winding portion 215, which are integrally formed. The coil (not shown) is located at the wire winding portion 215. The frame body 213 has a triangular claw shape, and the abutting block 222 abuts against the frame body 211.

In the illustrated embodiment, the frame body 213 is designed as a triangular claw shape. Since the frame body 213 is designed as a triangular claw shape, the top of it is formed into a sharp corner, such that the frame body 213 and the push rod 220 can have a self-adjusting function. Meanwhile, a winding wall of the winding portion 215 is configured to be as thin as possible, such that the whole frame 210 is lighter in weight, and the structural strength is more reliable. The force of the voice coil motor can be maximized via making it as light as possible.

In the illustrated embodiment, the rotator 200 further includes a wire leading board 230. Referring to FIG. 2, the wire leading board 230 is sleeved on the connecting rod 221, and is sandwiched between the abutting block 222 and the frame body 211. The wire leading board 230 is used to lead the coil to a load.

Meanwhile, the voice coil motor further includes a second bearing 400. Referring to FIG. 2 and FIG. 3, the upper cover 300 defines a receiving groove 310, the push rod 220 extends through the receiving groove 310, and the second bearing 400 is sleeved on the push rod 200 and is engaged with an inner wall of the receiving groove 400. The wire leading board 230 is pressed on the frame 210 via the push rod 220, then the frame 210 with the wound coil is mounted to the first bearing 150 in the end cover 130.

In the embodiment, the voice coil motor further includes an external board 500. Referring to FIG. 2 and FIG. 3, the upper cover 300 defines an external hole 320 on a sidewall thereof, and the external board 500 is engaged with an inner wall of the external hole 320, and is electrically coupled to the wire leading board 240. The external board 500 is fixed into the receiving groove 310 of the upper cover 300, the wire leading board 230 and the external board 500 is connected via an enameled wire, and the second bearing 400 is pressed into the upper cover 300, then the end cover 130 and the upper cover 300 is fixedly connected via a screw.

The technical features of the embodiments described above can be arbitrarily combined. In order to make the description succinct, there is no describing of all possible combinations of the various technical features in the foregoing embodiments. It should be noted that there is no contradiction in the combination of these technical features which should be considered as the scope of the description.

Although the present disclosure is illustrated and described herein with reference to specific embodiments, the present disclosure is not intended to be limited to the details shown. It is to be noted that, various modifications may be made in the details within the scope of the claims and without departing from the present invention. Therefore, the protection scope of the present invention is defined by the claims.

## Claims

1. A voice coil motor, comprising:
a stator (100) comprising a base (110), a magnet (120) and an end cover (130) wherein the magnet (120) is engaged with the end cover (130), the base (110) defines a cavity (111); the magnet (120) and the end cover (130) are located in the cavity (111);
a mover (200) comprising a frame (210), a coil and a push rod (220), wherein the frame (210) defines a connecting hole (211), the push rod (220) is partially located in the connecting hole (211) and is configured to abut against a fastener (140), the coil is wound around the frame (210), and the frame (210) is sleeved on the end cover (130); and
an upper cover (300), wherein the mover (200) is configured to be located in the upper cover (300), and the upper cover (300) is coupled to the base (110);
wherein the base (110), the magnet (120), and the end cover (130) each define a mounting through hole (121), and the fastener (140) extends through the mounting through holes (121) to sequentially connect the end cover (130), the magnet (120), and the base (110);
wherein the stator (100) further comprises a first bearing (150) and an embedding block (160);
the embedding block (160) defines a first through hole (161), the first bearing (150) is partially engaged with an inner wall of the first through hole (161); and
the first bearing (150) defines a second through hole (151), and is engaged with the fastener (140);
**characterised in that**
the push rod (220) extends through the second through hole (151).

2. The voice coil motor according to claim 1, wherein the end cover (130) defines a recess (131) in communication with the mounting through hole (121); the fastener (140) is located in the mounting through hole (121), the embedding block (160) is located in the recess (131) and abuts against the fastener (140).

3. The voice coil motor according to claim 1, wherein the push rod (220) comprises a connecting rod (221) and an abutting block (223), which are integrally formed; the connecting rod (221) is perpendicular to the abutting block (223).

4. The voice coil motor according to claim 3, wherein the frame (210) comprises a frame body (213) and a wire winding portion (215), which are integrally formed; the coil is located at the wire winding portion (215); the frame body (213) has a triangular claw shape, and the abutting block (222) abuts against the frame body (213).

5. The voice coil motor according to claim 4, wherein the mover (200) further comprises a wire leading board (240) sleeved on the connecting rod (221), and the wire leading board (240) is sandwiched between the abutting block (222) and the frame body (213).

6. The voice coil motor according to claim 1, wherein the voice coil motor further comprises a second bearing (400), the upper cover (300) defines a receiving groove (310), the push rod (220) extends through the receiving groove (310), and the second bearing (400) is sleeved on the push rod (220) and is engaged with an inner wall of the receiving groove (310).

7. The voice coil motor according to claim 5, wherein the voice coil motor further comprises an external board (500), the upper cover (300) defines an external hole (320) on a sidewall thereof, and the external board (500) is engaged with an inner wall of the external hole (320) and is electrically coupled to the wire leading board (240).

## Patentansprüche

1. Tauchspulenmotor, umfassend:
einen Stator (100), umfassend eine Basis (110), einen Magneten (120) und eine Endabdeckung (130), wobei der Magnet (120) mit der Endabdeckung (130) in Eingriff steht, die Basis (110) einen Hohlraum (111) definiert; der Magnet (120) und die Endabdeckung (130) in dem Hohlraum (111) angeordnet sind;
einen Beweger (200), umfassend einen Rahmen (210), eine Spule und eine Schubstange (220), wobei der Rahmen (210) ein Verbindungsloch (211) definiert, sich die Schubstange (220) teilweise in dem Verbindungsloch (211) befindet und so konfiguriert ist, dass sie an einem Befestigungselement (140) anstößt, die Spule um den Rahmen (210) gewickelt ist und der Rahmen (210) auf die Endabdeckung (130) geschoben ist; und
eine obere Abdeckung (300), wobei der Beweger (200) so konfiguriert ist, dass er sich in der oberen Abdeckung (300) befindet, und die obere Abdeckung (300) mit der Basis (110) gekoppelt ist;
wobei die Basis (110), der Magnet (120) und die Endabdeckung (130) jeweils ein Montagedurchgangsloch (121) definieren, und sich das Befestigungselement (140) durch die Montagedurchgangslöcher (121) erstreckt, um nacheinander die Endabdeckung (130), den Magneten (120) und die Basis (110) zu verbinden;
wobei der Stator (100) ferner ein erstes Lager (150) und einen Einbettungsblock (160) umfasst; der Einbettungsblock (160) ein erstes Durchgangsloch (161) definiert, das erste Lager (150) teilweise mit einer Innenwand des ersten Durchgangslochs (161) in Eingriff steht; und
das erste Lager (150) ein zweites Durchgangsloch (151) definiert und mit dem Befestigungselement (140) in Eingriff steht;
**dadurch gekennzeichnet, dass**
sich die Schubstange (220) durch das zweite Durchgangsloch (151) erstreckt.

2. Tauchspulenmotor nach Anspruch 1, wobei die Endabdeckung (130) eine Vertiefung (131) definiert, die mit dem Montagedurchgangsloch (121) in Verbindung steht; sich das Befestigungselement (140) in dem Montagedurchgangsloch (121) befindet, sich der Einbettungsblock (160) in der Vertiefung (131) befindet und gegen das Befestigungselement (140) anstößt.

3. Tauchspulenmotor nach Anspruch 1, wobei die Schubstange (220) eine Verbindungsstange (221) und einen anstoßenden Block (223) umfasst, die einstückig ausgebildet sind; die Verbindungsstange (221) senkrecht zu dem anstoßenden Block (223) ist.

4. Tauchspulenmotor nach Anspruch 3, wobei der Rahmen (210) einen Rahmenkörper (213) und einen Drahtwickelabschnitt (215) umfasst, die einstückig ausgebildet sind; sich die Spule an dem Drahtwicklungsabschnitt (215) befindet; der Rahmenkörper (213) eine dreieckige Klauenform aufweist, und der anstoßende Block (222) an dem Rahmenkörper (213) anstößt.

5. Tauchspulenmotor nach Anspruch 4, wobei der Beweger (200) ferner eine Drahtführungsplatte (240) umfasst, die auf die Verbindungsstange (221) geschoben ist, und die Drahtführungsplatte (240) übereinander geschichtet zwischen dem Anschlagblock (222) und dem Rahmenkörper (213) angeordnet ist.

6. Tauchspulenmotor nach Anspruch 1, wobei der Tauchspulenmotor ferner ein zweites Lager (400) umfasst, die obere Abdeckung (300) eine Aufnahmenut (310) definiert, sich die Schubstange (220) durch die Aufnahmenut (310) erstreckt, und das zweite Lager (400) auf die Schubstange (220) geschoben ist und mit einer Innenwand der der Aufnahmenut (310) in Eingriff steht.

7. Tauchspulenmotor nach Anspruch 5, wobei der Tauchspulenmotor ferner eine Außenplatte (500) umfasst, wobei die obere Abdeckung (300) ein Außenloch (320) an einer Seitenwand davon definiert, und die äußere Platte (500) mit einer inneren Wand des Außenlochs (320) in Eingriff steht und elektrisch mit der Drahtführungsplatte (240) gekoppelt ist.

## Revendications

1. Moteur à bobine mobile, comprenant :
un stator (100) comprenant une base (110), un aimant (120) et un couvercle d'extrémité (130) dans lequel l'aimant (120) est engagé avec le couvercle d'extrémité (130), la base (110) définit une cavité (111) ; l'aimant (120) et le couvercle d'extrémité (130) sont situés dans la cavité (111);
un élément de déplacement (200) comprenant un cadre (210), une bobine et une tige de poussée (220), dans lequel le cadre (210) définit un trou de connexion (211), la tige de poussée (220) est partiellement située dans le trou de connexion (211) et est configuré pour venir en butée contre une fixation (140), la bobine est enroulée autour du cadre (210), et le cadre (210) est emmanché sur le couvercle d'extrémité (130) ; et
un couvercle supérieur (300), dans lequel l'élément de déplacement (200) est configuré pour être situé dans le couvercle supérieur (300), et le couvercle supérieur (300) est couplé à la base (110); dans lequel la base (110), l'aimant (120) et le couvercle d'extrémité (130) définissent chacun un trou traversant de montage (121), et la fixation (140) s'étend à travers les trous traversants de montage (121) pour connecter séquentiellement l'extrémité le couvercle (130), l'aimant (120) et la base (110) ;
dans lequel le stator (100) comprend en outre un premier palier (150) et un bloc d'encastrement (160) ;
le bloc d'encastrement (160) définit un premier trou traversant (161), le premier palier (150) est partiellement engagé avec une paroi interne du premier trou traversant (161) ; et
le premier palier (150) définit un deuxième trou traversant (151), et est engagé avec la fixation (140) ;
**caractérisé en ce que**
la tige de poussée (220) s'étend à travers le deuxième trou traversant (151).

2. Moteur à bobine mobile selon la revendication 1, dans lequel le couvercle d'extrémité (130) définit un évidement (131) en communication avec le trou traversant de montage (121) ; la fixation (140) est située dans le trou traversant de montage (121), le bloc d'encastrement (160) est situé dans l'évidement (131) et vient en butée contre la fixation (140).

3. Moteur à bobine mobile selon la revendication 1, dans lequel la tige de poussée (220) comprend une bielle (221) et un bloc de butée (223), qui sont formés d'un seul tenant ; la bielle (221) est perpendiculaire au bloc de butée (223).

4. Moteur à bobine mobile selon la revendication 3, dans lequel le cadre (210) comprend un corps de cadre (213) et une partie d'enroulement de fil (215), qui sont formés d'un seul tenant ; la bobine est située au niveau de la partie d'enroulement de fil (215) ; le corps de cadre (213) a une forme de griffe triangulaire et le bloc de butée (222) vient en butée contre le corps de cadre (213).

5. Moteur à bobine mobile selon la revendication 4, dans lequel le dispositif de déplacement (200) comprend en outre une carte de guidage de fil (240) emmanchée sur la bielle (221), et la carte de guidage de fil (240) est prise en sandwich entre le bloc de butée (222) et le corps de cadre (213).

6. Moteur à bobine mobile selon la revendication 1, dans lequel le moteur à bobine mobile comprend en outre un deuxième palier (400), le couvercle supérieur (300) définit une rainure de réception (310), la tige de poussée (220) s'étend à travers la rainure de réception (310), et le deuxième palier (400) est emmanché sur la tige de poussée (220) et est engagé avec une paroi interne de la rainure de réception (310).

7. Moteur à bobine mobile selon la revendication 5, dans lequel le moteur à bobine mobile comprend en outre une carte externe (500), le couvercle supérieur (300) définit un trou externe (320) sur une paroi latérale de celui-ci, et la carte externe (500) est engagée avec une paroi interne du trou externe (320) et est couplée électriquement à la carte de guidage de fil (240).
